# EUROPÄISCHE PATENTSCHRIFT

(11) **EP 3 353 349 B1**
(45) Veröffentlichungstag und Bekanntmachung des Hinweises auf die Patenterteilung: **16.06.2021**
(21) Anmeldenummer: 16767140.3
(22) Anmeldetag: 13.09.2016
(51) Int. Cl.: E01C 19/48, B60W 30/188, B60W 10/06, B60W 10/08

(54) **VERFAHREN ZUM BETRIEB EINES SELBSTFAHRENDEN STRASSENFERTIGERS UND STRASSENFERTIGER HIERFÜR**
METHOD FOR OPERATING A SELF-PROPELLING ROAD PAVER AND ROAD PAVER THEREFOR
PROCÉDÉ DE FONCTIONNEMENT D'UN FINISEUR AUTONOME ET FINISSEUR

(30) Priorität: 23.09.2015 DE 102015012298
(43) Veröffentlichungstag der Anmeldung: 01.08.2018
(73) Patentinhaber: Volvo Construction Equipment AB, 631 85 Eskilstuna (SE)
(72) Erfinder: LACHMANN, Oliver, 31785 Hameln (DE); ORTLIEB, Christian, 31785 Hameln (DE)
(74) Vertreter: Eisenführ Speiser
(86) Internationale Anmeldenummer: PCT/EP2016/001539
(87) Internationale Veröffentlichungsnummer: WO 2017/050423

(56) Entgegenhaltungen:
- EP-A1- 2 818 675
- DE-A1-102010 048 151
- DE-A1-102013 008 032
- DE-U1- 20 305 577

## Beschreibung

Die Erfindung betrifft ein Verfahren zum Betrieb eines selbstfahrenden und über eine Maschinensteuerung steuerbaren Straßenfertigers nach dem Oberbegriff des Anspruchs 1 und einen selbstfahrenden Straßenfertiger hierfür nach dem Oberbegriff des Anspruchs 9.

Aus der DE 2003 05 577 U1 ist bekannt, dass die Heizeinrichtung eines Straßenfertigers eine Steuervorrichtung aufweist, in der eine Sektion vorgesehen ist, in der verschiedene Betriebsparameter des Fertigers und der Einbaubohle überwacht und für die Steuerung der Heizeinrichtung berücksichtigt werden, wobei an die Steuervorrichtung ein Heizungs-Vorwahlschalter angeschlossen ist, um eine Betriebsart der Heizeinrichtung vorzuwählen, wobei die Steuervorrichtung weiterhin mit einem Temperatursensor im Bereich der beheizten Arbeitskomponenten verbunden ist, der beispielsweise die Stromzufuhr zu der Heizeinrichtung unterbricht, sobald die erforderliche Aufheiztemperatur erreicht ist.

Aus der EP-A-2 818 675 A ist eine Steuerung für das Antriebssystem einer Arbeitsmaschine bekannt, wobei das Antriebssystem eine Verbrennungskraftmaschine mit mindestens zwei Abtrieben umfasst, über welche die Verbrennungskraftmaschine mindestens zwei Komponenten des Antriebssystem antreibt, wobei die Steuerung eine Optimierungsfunktion aufweist, welche einen Soll-Betriebspunkt der Verbrennungskraftmaschine für die jeweils geforderten Leistungen der Komponenten auf Grundlage eines Verbrauchskennfeldes der Verbrennungskraftmaschine und von Wirkungsgrad-Kennfeldern der angetriebenen Komponenten bestimmt.

Aus DE 39 11 401 C1 ist bekannt, dass bei einem Straßenfertiger die Drehzahl vom Fahrer manuell reguliert wird. Bei Transport- und Überstellungsfahrten wird die Leistung des Dieselmotors hauptsächlich für den Fahrantrieb gebraucht. Unterschiedliche Fahrsituationen werden vom Fahrer durch kontinuierliche Regelung der Drehzahl des Dieselmotors berücksichtigt. Für den Einbau-Arbeits-Betrieb läuft der Dieselmotor allerdings mit Nenndrehzahl. Der Fahrer nimmt keine Verstellungen vor, weil er den tatsächlichen Leistungsbedarf nicht kennt und vermeiden muss, dass während Unterbrechungen benötigte Arbeitsaggregate nicht mit der erforderlichen

Leistung versorgt worden sind. Die Umwelt wird unnötig durch Lärm und Abgase belastet.

Um zumindest bei Unterbrechungen des Einbau-Arbeits-Fahrbetriebs die Umweltbelastung und den Energieverbrauch zu vermindern ist gemäß DE 39 11 401 C1 vorgesehen, die Drehzahl des Dieselmotors während der Unterbrechung des Einbau-Fahrbetriebs an den Leistungsbedarf der Arbeitsaggregate automatisch anzupassen. Die Anpassung kann dabei so vorgenommen werden, dass zwischen der Nenndrehzahl und der Leerlaufdrehzahl verstellt wird. Der Generator zur Stromversorgung der Bohlenheizung kann so ausgelegt sein, dass er zur Versorgung der Bohlenheizung nicht die Nenndrehzahl, sondern eine niedrigere Drehzahl benötigt. Wenn der die Heizung versorgende Generator bereits bei einer unterhalb der Nenndrehzahl liegenden Drehzahl ausreichende elektrische Leistung bereitstellt, braucht die Drehzahl nur bis zu diesem Wert hochgefahren zu werden. Nachteilig ist jedoch, dass das Einsparpotential nur gering ist, wenn die ständige Betriebsbereitschaft des Straßenfertigers nicht gefährdet werden soll.

Aus WO 00/47821 A1 und DE 10 2013 008 032 A1 sind jeweils ein Verfahren und eine Vorrichtung zum elektrischen Beheizen einer Fertigerbohle bekannt. Ein Heizwiderstand der Fertigerbohle bezieht dazu elektrische Leistung von einem Generator. Durch Änderung einer Erregerspannung am Generator kann die elektrische Leistung des Generators variieren. In Abhängigkeit von Signalen eines Temperatursensors, der die Temperatur an der Fertigerbohle misst, kann die Erregerspannung über eine Regelung erhöht oder gesenkt werden, um den Heizvorgang an der Fertigerbohle zu erhöhen oder zu verringern. Für die Regelung kann ein Temperatursollwert in einer elektronischen Regeleinheit vorgehalten und an die jeweilige Aufgabe angepasst werden. Das Ändern der Generatorspannung ermöglicht, den apparativen Aufwand zu reduzieren, da Leistungsschalter für das Ein- und Ausschalten entfallen können. Nachteilig ist jedoch, dass keine wesentliche Brennstoffeinsparung erreicht wird.

Auch aus WO 2014/124545 A1 ist es bekannt, die Heizleistung des oder der elektrischen Heizelemente zum Beheizen einer Einbaubohle eines Straßenfertigers dadurch zu verändern, dass die elektrische Spannung, mit der die elektrischen Heizelemente beaufschlagt werden, verändert wird. Dies wird dadurch bewerkstelligt, dass der Erregerstrom des Stromgenerators verändert wird und/oder dass die Antriebsdrehzahl des Stromgenerators verändert wird. Der Generator kann dabei im Nominallast-, Teillast- oder Überlastbetrieb laufen. Durch die Veränderung des Erregerstroms kann der antreibende Motor konstant belastet werden, wodurch dieser geschont und im Falle eines Verbrennungsmotors zudem Kraftstoff gespart wird. Nachteilig ist aber auch hier, dass keine wesentliche Brennstoffeinsparung erreicht wird. Informationen über Beheizungsfehler an der Einbaubohle werden ferner nur über die Temperatursensoren geliefert, so dass Einbaufehler entstehen können.

Aufgabe der Erfindung ist es daher, ein Verfahren zum Betrieb eines selbstfahrenden Straßenfertigers und einen Straßenfertiger hierfür zu schaffen, die die Möglichkeiten zur Energieeinsparung besser nutzbar machen und dabei die Betriebsbereitschaft des Straßenfertigers fördern.

Diese Aufgabe wird durch die Merkmale der Ansprüche 1 und 9 gelöst.

Hierdurch wird ein Verfahren und ein Straßenfertiger geschaffen, bei denen vor und/oder während des Einbauvorganges Strommessungen des zwischen einer frequenzunabhängig dimensionierten elektrischen Bohlenheizung und dem Generator fließenden Stroms erfolgen zum Bestimmen und Erfassen einer aktuell zumindest von der elektrischen Bohlenheizung abgenommenen generatorischen Leistung.

Erfindungsgemäß wird also ein generatorischer Leistungsbedarf festgestellt. Dazu erhält eine Maschinensteuerung des Straßenfertigers von einer Strommessvorrichtung gemessene Werte des Ausgangsstroms des Generators. Bei einem gewählten Spannungssollwert der Ausgangsspannung des Generators ist der Ausgangsstrom ein Maß für die am Generator abgenommene elektrische Leistung.

Durch die Übermittlung des Ausgangsstroms des Generators an die Maschinensteuerung wird die Möglichkeit einer Rückkopplung geschaffen, die beispielsweise die Kontrolle und frühzeitige Fehlererkennung der Bohlenbeheizung und/oder eine dynamische Anpassung der Drehzahl des Verbrennungsmotors an die momentan am Generator benötigte elektrische Leistung ermöglicht. Die Bohlenheizung kann dabei neben der Beheizung einer Bodenplatte auch die Beheizung der üblicherweise vor der Bodenplatte angeordneten Stampfer umfassen.

Durch die Strommessung kann ferner auf die stark unterschiedlichen Leistungsaufnahmen optimal reagiert werden, die sich aus der Möglichkeit der unterschiedlich breit aufbaubaren Bohle ergeben. Schließlich besteht durch die Möglichkeit des Betriebs mit einer gegenüber einer Nennspannung erhöhten Spannung, eine Verkürzung der Aufheizzeit der Bohle erreichen zu können.

Die Anpassung der Drehzahl des Verbrennungsmotors an den erfassten generatorischen Leistungsbedarf kann unter Berücksichtigung des verbrauchsoptimalen Motorkennfelds des Verbrennungsmotors erfolgen. Der Betriebspunkt des Verbrennungsmotors kann entlang der bedarfsbezogenen Leistungshyperbel im Motorkennfeld hin zu einer unteren Mindestdrehzahl verlagert werden. Für Betriebspunkte des Verbrennungsmotors mit günstigem spezifischem Treibstoffverbrauch wird mit möglichst kleiner Drehzahl des Verbrennungsmotors gefahren. Da die sinkende Drehzahl durch ein steigendes Drehmoment ausgeglichen wird, ist eine untere Mindestdrehzahl bestimmt durch das Drehmoment, das an den angekoppelten Generator noch übertragbar ist, ohne dass es bei Verwendung beispielsweise eines Keilriemens zu einem Durchrutschen kommt.

Für die Antriebe des Hydrauliksystems kann die Reduzierung der Drehzahl des Verbrennungsmotors durch in ihrem Schluckvolumen veränderliche Hydraulikpumpen ausgeglichen werden, um einen konstanten Volumenstrom erzeugen zu können, wie beispielsweise in DE 10 2009 031 412 A1 beschrieben.

Eine vorzugsweise vorgesehene Regelung der Ausgangsspannung des Generators auf einen wählbaren Spannungssollwert bewirkt dabei gleichzeitig die zuverlässige Bereitstellung der benötigten elektrischen Leistung während der Einstellung der Drehzahl. Bei der angepassten Drehzahl ist das Leistungsangebot des Verbrennungsmotors abgestimmt auf den tatsächlichen Leistungsbedarf von elektrischen Komponenten, mindestens der elektrischen Bohlenheizung, insbesondere vor einem Einbauvorgang oder während Einbauunterbrechungen.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

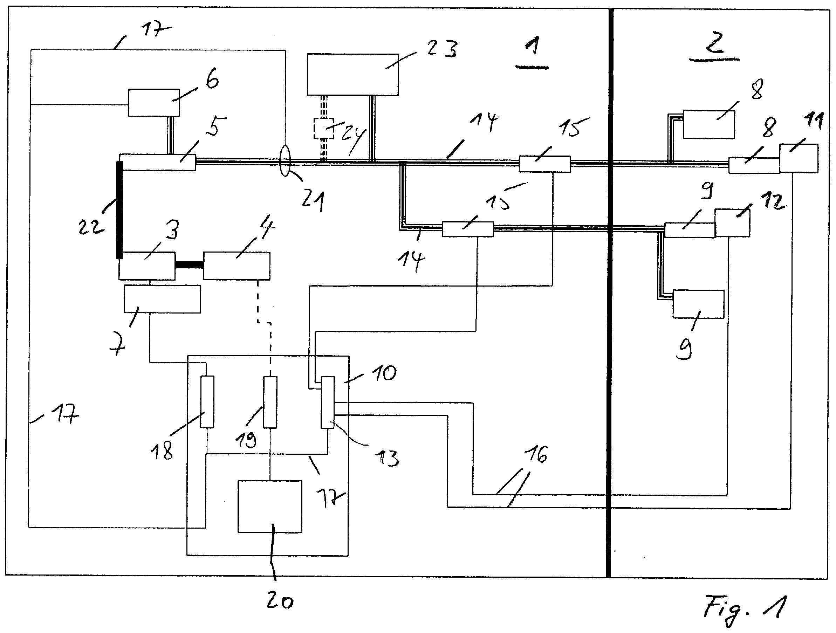

Fig. 1 zeigt ein Blockschaltbild eines Steuer- und Regelsystems zum Betrieb eines Straßenfertiges gemäß einem Ausführungsbeispiel der Erfindung.

Die Erfindung betrifft ein Verfahren zum Betrieb eines selbstfahrenden Straßenfertigers, wozu auf dem Straßenfertiger ein Steuer- und Regelsystem installiert ist, wie beispielsweise in Fig. 1 dargestellt. Der Straßenfertiger umfasst dabei in bekannter Weise einen Traktor 1 und eine Einbaubohle 2 zum Einbau eines Fahrbahnbelages aus bituminösem Einbaugut.

Der Straßenfertiger weist als ein Primärantriebsaggregat einen Verbrennungsmotor 3 auf, der motorische Leistung für Antriebe eines Hydrauliksystems 4 und für einen Generator 5 zur Erzeugung einer elektrischen Leistung liefert. Der Generator 5 versorgt mindestens eine elektrische Bohlenheizung der Einbaubohle 2 des Straßenfertigers mit elektrischer Energie, so dass diese Wärme produziert. Die Bohlenheizung beheizt vorzugsweise eine Bodenplatte und Stampfer der Einbaubohle 2. Die elektrische Bohlenheizung umfasst vorzugsweise mehrere Gruppen von Heizelementen 8, 9, die hier jeweils als elektrische Widerstandsheizelemente ausgebildet und in der Einbaubohle 2 eingebaut sind. Die elektrische Bohlenheizung ist erfindungsgemäß frequenzunabhängig dimensioniert beispielsweise dadurch, dass die Widerstandsheizelemente hier ohmsche Widerstände sind. Die Einbauorte der Heizelemente 8, 9 können sich auf die verschiedenen Funktionskomponenten der Einbaubohle 2 wie Bodenplatte, Stampfer usw. beziehen.

Über eine rechnergestützte Maschinensteuerung 10 erfolgt eine Einstellung bzw. Regelung der Heizleistung der Heizelemente 8, 9, wobei Temperatursensoren 11, 12 die Temperatur insbesondere am Heizelement 8, 9 oder an der Einbaubohle 2 messen. Für die Regelung kann ein Temperatursollwert in einer elektronischen Regeleinheit 13 der Maschinensteuerung 10 vorgegeben und an die jeweilige Einbausituation angepasst werden. Die Regeleinheit 13 ist dazu über Leitungen 16 mit den Temperatursensoren 11, 12 verbunden.

Die Heizelemente 8, 9 werden mit elektrischer Leistung aus dem Generator 5 über einen Stromkreis 14 gespeist. Der Generator 5 liefert generatorische Leistung, die zumindest von der Bohlenheizung in Wärmeenergie gewandelt wird. Der Generator 5 ist vorzugsweise ein 3-Phasen-Drehstromgenerator, dessen Ausgangsspannung über eine Generatorsteuerung 6 wählbar ist. Die am Ausgang des Generators 5 zur Verfügung gestellte Spannung kann dann durch eine Änderung der Erregerspannung geändert werden. Über Leistungsschalter 15 können die Heizelemente 8, 9 ein- oder ausgeschaltet werden. Über die rechnergestützte Maschinensteuerung 10 erfolgt eine Einstellung bzw. Regelung der Ausgangsspannung des Generators 5, wozu die Generatorsteuerung 6 über einen Datenbus 17 mit der Maschinensteuerung 10 kommuniziert. An den Datenbus 17 ferner angeschlossen sind die Regeleinheit 13 für die Einstellung der Heizleistung sowie eine Regeleinheit 18 für eine Motorsteuerung 7 des Verbrennungsmotors 3 und gegebenenfalls eine Regeleinheit 19 für das Hydrauliksystem 4. Neben den Regeleinheiten 13, 18, 19 gehört zur Maschinensteuerung 10 ein Bedienterminal 20 für Bedien- und Anzeigefunktionen.

An den Datenbus 17 zusätzlich angeschlossen ist eine Strommessvorrichtung 21, die zur Messung des Ausgangsstroms des Generators 5 im Stromkreis 14 des Generators 5 mit der Bohlenheizung bzw. deren Heizelementen 8, 9 vorgesehen ist und über den Datenbus 17 mit der Maschinensteuerung 10 kommuniziert. Die Strommessung kann ständig oder zu diskreten Zeitpunkten erfolgen, und zwar vor und/oder während des Einbauvorganges. Die Strommessvorrichtung 21 kann baulich in die Generatorsteuerung 6 integriert werden.

Das mit der Strommessung verfolgte Ziel ist das Einfahren und Halten möglichst kleiner Drehzahlen des Verbrennungsmotors unter Nutzung von Nenn- und Grenzzuständen des an den Verbrennungsmotor 3 angekoppelten Generators 5, der zumindest die elektrische Bohlenheizung speist, und zwar vorzugsweise in Verbindung mit oder alternativ zu einer Störungserkennung für die elektrische Bohlenheizung. Denn defekte ohmsche Widerstände als Heizelemente 8, 9 reduzieren den Stromfluss gegenüber einem Sollwert und ermöglichen durch Strommessung eine frühzeitige Fehlererkennung, bevor überhaupt ein Temperatursollwert der Einbaubohle unterschritten wird.

Die Nennspannung für die ohmschen Widerstände der Heizelemente 8, 9 liegt üblicherweise bei 230 V. Ein insbesondere heizbedarfsabhängiges zeitweiliges Betreiben mit niedrigerer oder höherer Spannung ist möglich. Die Stromaufnahme ist proportional zur angelegten Spannung. Die abgegebene Heizleistung verhält sich quadratisch zur angelegten Spannung.

Die mechanische Anbindung des Generators 5 an den Verbrennungsmotor 3 erfolgt vorzugsweise über einen Generatorriemen 22. Alternativ kann die Anbindung über ein Übersetzungsgetriebe erfolgen.

Gemäß dem erfindungsgemäßen Verfahren zum Betrieb des selbstfahrenden und über die Maschinensteuerung 10 steuerbaren Straßenfertigers ist also vorgesehen, dass der Verbrennungsmotor 3 motorische Leistung für Antriebe des Hydrauliksystems 4 und für den Generator 5 zur Erzeugung einer generatorischen Leistung zum Versorgen mindestens der elektrischen Bohlenheizung mit elektrischer Energie liefert, und die motorische und die generatorische Leistung über die Motorsteuerung 7 sowie die Generatorsteuerung 6 verändert werden. Vor und/oder während des Einbauvorganges erfolgen Strommessungen des zwischen der frequenzunabhängig dimensionierten elektrischen Bohlenheizung und dem Generator fließenden Stroms zum Bestimmen und Erfassen einer aktuell zumindest von der elektrischen Bohlenheizung bzw. deren Heizelementen 8, 9 abgenommenen generatorischen Leistung.

Die erfasste Ist-Größe des generatorischen Leistungsbedarfs kann als Zustands-Größe in die Maschinensteuerung 10 für eine Verfügbarkeitsprüfung der elektrischen Bohlenheizung eingegeben werden. Ein motorisches Leistungsangebot des Verbrennungsmotors 3 kann basierend auf einer Leistungsdifferenz zwischen erfasstem generatorischem Leistungsbedarf und motorischem Leistungsangebot angepasst und der Betriebspunkt des Verbrennungsmotors 3 entlang der bedarfsbezogenen Leistungshyperbel im Motorkennfeld hin zu einer unteren Mindestdrehzahl bei einem auf den angekoppelten Generator 5 übertragbaren Drehmoment verlagert werden. Die vom Generator 5 aufgenommene Leistung ist durch die Strommessung bekannt, so dass die Motorausgangsleistung anpassbar ist auf eine geringere als die maximal mögliche Motorausgangsleistung, ohne dass die Gefahr eines Abwürgens des Verbrennungsmotors 3 besteht. Eine möglichst niedrige Drehzahl des Verbrennungsmotors 3 ermöglicht eine Reduzierung der Lärmemission und des Kraftstoffverbrauchs.

Der Generatorriemen 22 kann üblicherweise nur ein limitiertes Drehmoment übertragen, ohne dass es zu Schlupf und anschließender Zerstörung kommt. Wenn hohe Heizleistung erforderlich ist und das höchstzulässige Drehmoment bereits erreicht ist, ist mehr Leistung durch eine Erhöhung der unteren Mindestdrehzahl zu übertragen. Durch die Strommessung ist erfindungsgemäß die Heizleistung bekannt, so dass nicht mehr immer von der höchsten denkbaren Leistung ausgegangen werden muss, wie dies der Fall war, wenn die Heizleistung unbekannt war.

Während des Einbauvorganges kann zudem ein motorischer Leistungsbedarf des Hydrauliksystems 4 berücksichtigt werden.

Eine Ausgangsspannung des Generators 5 kann auf einen wählbaren Spannungssollwert eingestellt werden. Die Generatorinnentemperatur kann gemessen und als Zustandsgröße in die Maschinensteuerung 10 eingegeben werden, um ein Überhitzen des Generators 5 durch ein Anheben der Drehzahl des Verbrennungsmotors 3 zu vermeiden.

Die generatorische Leistung kann schließlich auch für andere elektrische Komponenten und/oder zum Aufladen eines elektrischen Energiespeichers 23 genutzt werden, aus dem die elektrische Bohlenheizung wahlweise versorgt werden kann. Ein hierfür geeigneter Gleichrichter 24 kann vorgesehen sein, um den Drehstrom in Gleichstrom zu wandeln.

Der Spannungssollwert der Generatorsteuerung 6 kann von der Maschinensteuerung 10 über den Datenbus 17 vorgegeben werden. Dadurch wird eine kontinuierliche Steuerung der an dem Generator 5 abgenommenen Leistung abhängig von dem Spannungssollwert erreicht. Insbesondere kann der Spannungssollwert während der Einstellung der angepassten Drehzahl auf einen niedrigeren zweiten Spannungssollwert abgesenkt werden. Dadurch wird die Leistungsreserve des Verbrennungsmotors 3 zur Einstellung der angepassten Drehzahl erhöht und die zur Einstellung benötigte Zeitspanne verkürzt.

Vorzugsweise wird die von der Generatorsteuerung 6 gemessene Ausgangsspannung des Generators 5 der Maschinensteuerung 10 zugeführt. In diesem Fall kann die Maschinensteuerung 10 die tatsächlich abgenommene Leistung aus den Echtzeit-Daten von Ausgangsspannung und -strom berechnen und zugleich die Regelung der Ausgangsspannung durch die Generatorsteuerung 6 überwachen. Für die Generatorsteuerung 6 ist vorzugsweise ein Generatorregler vorgesehen.

Die erforderliche Mindestdrehzahl kann auch durch eine zulässige Höchsttemperatur des Generators 5 mitbestimmt sein. Dazu überwacht vorzugsweise ein Temperatursensor (nicht dargestellt) des Generators 5 eine Generatorinnentemperatur. Die Erzeugung der tatsächlich abgenommenen elektrischen Leistung durch den Generator 5 erzeugt umso mehr Wärme im Inneren des Generators 5, je geringer die Drehzahl und je höher das Drehmoment ist, bei denen die mechanische Leistung bereitgestellt wird. Die Bestimmung der erforderlichen Mindestdrehzahl durch Überwachung der Generatorinnentemperatur erlaubt die Minimierung der Drehzahl bei gleichzeitigem Schutz vor Überhitzung des Generators 5. Der Generator 5 weist folglich vorzugsweise einen Temperatursensor (nicht dargestellt) auf, dessen Temperaturmesswert über den Datenbus 17 an die Maschinensteuerung 10 übertragbar ist.

Wie bereits vorstehend ausgeführt, wird die erforderliche Mindestdrehzahl durch einen Grenzwert für den Schlupfwert des Generatorantriebs bestimmt. Der Schlupfwert kann von der Maschinensteuerung 10 berechnet werden aus dem Verhältnis der Drehzahlen von Generator 5 und Verbrennungsmotor 3, die der Maschinensteuerung 10 von Drehzahlmessvorrichtungen (nicht dargestellt) über den Datenbus 17 übertragen werden können. Bei einem Schlupfwert über einem vorgegebenen Grenzwert ist das von dem Generatorantrieb maximal übertragbare Drehmoment überschritten. Die Bestimmung der erforderlichen Mindestdrehzahl durch Überwachung des Schlupfwertes erlaubt somit die Minimierung der Drehzahl bei gleichzeitigem Schutz vor Überlastung des Generatorantriebs.

Der erfindungsgemäß vorgesehene selbstfahrende Straßenfertiger ist demzufolge ausgestattet mit einem Verbrennungsmotor 3, der das Hydrauliksystem 4 und den Generator 5 zum Versorgen mindestens einer elektrischen Bohlenheizung antreibt, und mit einer Motorsteuerung 7 und einer Generatorsteuerung 6, die an die Maschinensteuerung 10 für einen Einbaubetrieb angeschlossen sind. Vorgesehen ist zusätzlich die Strommessvorrichtung 21 zur Messung des Ausgangsstroms des Generators 5 im Stromkreis des Generators 5 mit der frequenzunabhängig dimensionierten elektrischen Bohlenheizung, und die Strommessvorrichtung 21 angeschlossen ist über den Datenbus 17 an die Maschinensteuerung 10. Die Maschinensteuerung 10 ist ausgelegt zur Durchführung des vorstehend beschriebenen Verfahrens zum Betrieb des Straßenfertigers.

Eine möglichst niedrige Drehzahl des Verbrennungsmotors 3 zur Verringerung der Lärmemission reduziert auch die Frequenz des Mehrphasenwechselstroms, den der Generator 5 aus der mechanischen Leistung des Verbrennungsmotors 3 wandelt. Die ohmschen Widerstände der Heizelemente 8, 9 arbeiten allerdings frequenzunabhängig, so dass die Reduzierung der Drehzahl des Verbrennungsmotors 3 optimiert werden kann zusammen mit einer Optimierung der Energiebereitstellung für die Heizelemente 8, 9, da die Leistungsaufnahme der elektrischen Verbraucher, insbesondere der Heizelemente 8, 9 bzw. der Bohlenheizung, bestimmt und erfasst wird durch die Strommessung mittels der Strommessvorrichtung 21.

## Patentansprüche

1. Verfahren zum Betrieb eines selbstfahrenden und über eine Maschinensteuerung (10) steuerbaren Straßenfertigers, bei dem ein Verbrennungsmotor (3) motorische Leistung für Antriebe eines Hydrauliksystems (4) und für einen Generator (5) zur Erzeugung einer generatorischen Leistung zum Versorgen mindestens einer elektrischen Bohlenheizung mit elektrischer Energie liefert, und die motorische und die generatorische Leistung über eine Motorsteuerung (7) sowie eine Generatorsteuerung (6) verändert werden, **dadurch gekennzeichnet, dass** vor und/oder während des Einbauvorganges Strommessungen des zwischen einer frequenzunabhängig dimensionierten elektrischen Bohlenheizung und dem Generator (5) fließenden Stroms erfolgen zum Bestimmen und Erfassen einer aktuell zumindest von der elektrischen Bohlenheizung abgenommenen generatorischen Leistung.

2. Verfahren nach Anspruch 1, **dadurch gekennzeichnet, dass** die erfasste Ist-Größe des generatorischen Leistungsbedarfs als Zustands-Größe in die Maschinensteuerung (10) für eine Verfügbarkeitsprüfung der elektrischen Bohlenheizung eingegeben wird.

3. Verfahren nach Anspruch 1 oder 2, **dadurch gekennzeichnet, dass** ein motorisches Leistungsangebot des Verbrennungsmotors (3) basierend auf einer Leistungsdifferenz zwischen erfasstem generatorischem Leistungsbedarf und motorischem Leistungsangebot angepasst und der Betriebspunkt des Verbrennungsmotors (3) entlang der bedarfsbezogenen Leistungshyperbel im Motorkennfeld hin zu einer unteren Mindestdrehzahl bei einem auf den angekoppelten Generator (5) übertragbaren Drehmoment verlagert wird.

4. Verfahren nach einem der Ansprüche 1 bis 3, **dadurch gekennzeichnet, dass** eine Ausgangsspannung des Generators (5) auf einen wählbaren Spannungssollwert eingestellt wird.

5. Verfahren nach einem der Ansprüche 1 bis 4, **dadurch gekennzeichnet, dass** während des Einbauvorganges ein motorischer Leistungsbedarf des Hydrauliksystems (4) berücksichtigt wird.

6. Verfahren nach einem der Ansprüche 1 bis 5, **dadurch gekennzeichnet, dass** die Generatorinnentemperatur gemessen und als Zustandsgröße in die Maschinensteuerung (10) eingegeben wird, um ein Überhitzen des Generators (5) durch ein Anheben der Drehzahl des Verbrennungsmotors (3) zu vermeiden.

7. Verfahren nach einem der Ansprüche 1 bis 6, **dadurch gekennzeichnet, dass** generatorische Leistung zum Aufladen eines elektrischen Energiespeichers (23) genutzt wird, aus dem die elektrische Bohlenheizung wahlweise versorgt wird.

8. Verfahren nach einem der Ansprüche 1 bis 7, **dadurch gekennzeichnet, dass** die elektrische Bohlenheizung ohmsche Widerstande als Heizelemente (8, 9) aufweist und zur Steuerung der Bohlentemperatur Temperatursensoren (11, 12) an der Bohle (2) angebracht sind.

9. Selbstfahrender Straßenfertiger mit einem Verbrennungsmotor (1), der ein Hydrauliksystem (4) und einen Generator (5) zum Versorgen mindestens einer elektrischen Bohlenheizung antreibt, und mit einer Motorsteuerung (7) und einer Generatorsteuerung (6), die an eine Maschinensteuerung (10) für einen Einbaubetrieb angeschlossen sind, **dadurch gekennzeichnet, dass** eine Strommessvorrichtung (21) zur Messung des Ausgangsstroms des Generators (5) im Stromkreis des Generators (5) mit einer frequenzunabhängig dimensionierten elektrischen Bohlenheizung vorgesehen ist und die Strommessvorrichtung (21) über einen Datenbus (17) an die Maschinensteuerung (10) angeschlossen ist.

10. Straßenfertiger nach Anspruch 9, **dadurch gekennzeichnet, dass** die Maschinensteuerung (10) ausgelegt ist für ein Ausführen einer Verfügbarkeitsprüfung der elektrischen Bohlenheizung anhand von Strommesswerten.

11. Straßenfertiger nach Anspruch 9 oder 10, **dadurch gekennzeichnet, dass** die Maschinensteuerung (10) ausgelegt ist für ein Kommunizieren von Drehzahlvorgaben an die Motorsteuerung (7), abhängig von dem über die Strommessvorrichtung (21) ermittelten generatorischen Leistungsbedarf mindestens der elektrischen Bohlenheizung für ein schlupffreies Antreiben des Generators (5) durch den Verbrennungsmotor (3).

12. Straßenfertiger nach einem der Ansprüche 9 bis 11, **dadurch gekennzeichnet, dass** der Generator (5) einen Temperatursensor aufweist, dessen Temperaturmesswert über den Datenbus (17) an die Maschinensteuerung (10) übertragbar ist.

13. Straßenfertiger nach einem der Ansprüche 9 bis 12, **dadurch gekennzeichnet, dass** zur Überwachung des schlupffreien Antriebs des Generators (5) Drehzahlmessvorrichtungen zur Bestimmung der Drehzahl des Verbrennungsmotors (3) und des Generators (5) vorgesehen sind, deren Drehzahlmesswerte über den Datenbus (17) an die Maschinensteuerung (10) übertragbar sind.

14. Straßenfertiger nach einem der Ansprüche 9 bis 13, **dadurch gekennzeichnet, dass** der Generator (5) mit einem die elektrische Bohlenheizung wahlweise mit Energie versorgenden Energiespeicher (23) verbunden ist.

15. Straßenfertiger nach einem der Ansprüche 9 bis 14, **dadurch gekennzeichnet, dass** die elektrische Bohlenheizung ohmsche Widerstande als Heizelemente (8, 9) aufweist und zur Steuerung der Bohlentemperatur Temperatursensoren (11, 12) an der Bohle angebracht sind.

16. Straßenfertiger nach einem der Ansprüche 9 bis 15, **dadurch gekennzeichnet, dass** der Generator (5) über einen Keilriemen oder ein Übersetzungsgetriebe mit dem Verbrennungsmotor (3) gekoppelt ist.

## Claims

1. A method for operating a road paver that is self-propelled and may be controlled via a machine controller (10) and in said method an internal combustion engine (3) provides engine power for drives of a hydraulic system (4) and for a generator (5) so as to generate a generator power for supplying at least one electrical screed plate heating system with electrical energy, and the engine and generator power are changed via an engine controller (7) and also a generator controller (6), **characterized in that** prior to and/or during the paving procedure current measurements are performed on the current that is flowing between an electrical screed plate heating system, which is dimensioned in a frequency-independent manner, and the generator (5) in order to determine and ascertain a prevailing generator power that is drawn off at least by the electrical screed plate heating system.

2. The method as claimed in claim 1, **characterized in that** the ascertained actual variable of the generator power requirement is input as a state variable into the machine controller (10) in order to perform a check regarding the availability of the electrical screed plate heating system.

3. The method as claimed in claim 1 or 2, **characterized in that** an engine power that may be provided by the internal combustion engine (3) is adjusted based upon a power difference between the ascertained generator power requirement and the engine power that may be provided, and the operating point of the internal combustion engine (3) is displaced along the demand-related power hyperbola in the engine characteristic diagram towards a lower minimum rotational speed in the case of a torque that may be transmitted to the coupled generator (5).

4. The method as claimed in any one of claims 1 to 3, **characterized in that** an output voltage of the generator (5) is set to a desired voltage value that may be selected.

5. The method as claimed in any one of claims 1 to 4, **characterized in that** during the paving procedure an engine power requirement of the hydraulic system (4) is taken into account.

6. The method as claimed in any one of claims 1 to 5, **characterized in that** the interior temperature of the generator is measured and is input into the machine controller (10) as a state variable in order to avoid the generator (5) overheating as a result of the rotational speed of the internal combustion engine (3) increasing.

7. The method as claimed in any one of claims 1 to 6, **characterized in that** generator power is used in order to charge an electrical energy storage device (23) and the electrical screed plate heating system is selectively supplied from said energy storage device.

8. The method as claimed in any one of claims 1 to 7, **characterized in that** the electrical screed plate heating system comprises ohmic resistors as heating elements (8, 9) and temperature sensors (11, 12) are attached to the screed unit (2) so as to control the screed unit temperature.

9. A self-propelled road paver having an internal combustion engine (1) that drives a hydraulic system (4) and drives a generator (5) for supplying at least one electrical screed plate heating system, and said self-propelled road paver having an engine controller (7) and a generator controller (6) that are connected to a machine controller (10) for a paving operation, **characterized in that** a current measuring device (21) is provided in the current circuit of the generator (5) so as to measure the output current of the generator (5), said current circuit having an electrical screed plate heating system, which is dimensioned in a frequency-independent manner, and the current measuring device (21) is connected via a data bus (17) to the machine controller (10).

10. The road paver as claimed in claim 9, **characterized in that** the machine controller (10) is designed in order to perform a check regarding the availability of the electrical screed plate heating system with reference to measured current values.

11. The road paver as claimed in claim 9 or 10, **characterized in that** the machine controller (10) is designed so as to communicate rotational speed specifications to the engine controller (7) in dependence upon the generator power requirement at least of the electrical screed plate heating system, said generator power requirement being determined via the current measuring device (21), in order to drive the generator (5) in a slip-free manner by means of the internal combustion engine (3).

12. The road paver as claimed in any one of claims 9 to 11, **characterized in that** the generator (5) comprises a temperature sensor and its measured temperature value may be transmitted via the data bus (17) to the machine controller (10).

13. The road paver as claimed in any one of claims 9 to 12, **characterized in that** in order to monitor the slip-free drive of the generator (5) rotational speed measuring devices are provided in order to determine the rotational speed of the internal combustion engine (3) and the generator (5) and the measured rotational speed values of said rotational speed measuring devices may be transmitted via the data bus (17) to the machine controller (10).

14. The road paver as claimed in any one of claims 9 to 13, **characterized in that** the generator (5) is connected to an energy storage device (23) that selectively supplies the electrical screed plate heating system with energy.

15. The road paver as claimed in any one of claims 9 to 14, **characterized in that** the electrical screed plate heating system comprises ohmic resistors as heating elements (8, 9) and temperature sensors (11, 12) are attached to the screed unit so as to control the screed unit temperature.

16. The road paver as claimed in any one of claims 9 to 15, **characterized in that** the generator (5) is coupled to the internal combustion engine (3) via a V-belt or a transmission gearing.

## Revendications

1. Procédé de fonctionnement d'un finisseur autonome et pouvant être commandé par une commande de machine (10), pour lequel un moteur à combustion interne (3) fournit une puissance motrice à des entraînements d'un système hydraulique (4) et à un générateur (5) pour la génération d'une puissance génératrice pour l'alimentation en énergie électrique au moins d'un chauffage électrique de poutre, et la puissance motrice et la puissance génératrice sont modifiées par une commande de moteur (7) ainsi qu'une commande de générateur (6), **caractérisé en ce qu'**avant et/ou pendant l'opération de montage des mesures du courant circulant entre un chauffage électrique de poutre dimensionné indépendamment de la fréquence et le générateur (5) sont effectuées pour la détermination et la détection d'une puissance génératrice prélevée actuellement au moins par le chauffage électrique de poutre.

2. Procédé selon la revendication 1, **caractérisé en ce que** la grandeur réelle détectée du besoin en puissance génératrice est saisie en tant que grandeur d'état dans la commande de machine (10) pour une vérification de disponibilité du chauffage électrique de poutre.

3. Procédé selon la revendication 1 ou 2, **caractérisé en ce qu'**une offre de puissance motrice du moteur à combustion interne (3) est adaptée sur la base d'une différence de puissance entre le besoin en puissance génératrice détecté et l'offre de puissance motrice et le point de fonctionnement du moteur à combustion interne (3) est déplacé le long de l'hyperbole de puissance liée au besoin dans le champ caractéristique de moteur vers une vitesse de rotation minimale inférieure pour un couple transmissible au générateur couplé (5).

4. Procédé selon l'une des revendications 1 à 3, **caractérisé en ce qu'**une tension de sortie du générateur (5) est réglée à une valeur de consigne de tension pouvant être choisie.

5. Procédé selon l'une des revendications 1 à 4, **caractérisé en ce que** pendant l'opération de montage un besoin en puissance motrice du système hydraulique (4) est pris en considération.

6. Procédé selon l'une des revendications 1 à 5, **caractérisé en ce que** la température interne du générateur est mesurée et est saisie en tant que grandeur d'état dans la commande de machine (10) afin d'éviter une surchauffe du générateur (5) par une augmentation de la vitesse de rotation du moteur à combustion interne (3).

7. Procédé selon l'une des revendications 1 à 6, **caractérisé en ce que** la puissance génératrice est utilisée pour le chargement d'un accumulateur d'énergie électrique (23), à partir duquel le chauffage électrique de poutre est alimenté au choix.

8. Procédé selon l'une des revendications 1 à 7, **caractérisé en ce que** le chauffage électrique de poutre présente des résistances ohmiques en tant qu'éléments de chauffage (8, 9) et pour la commande de la température de poutre des capteurs de température (11, 12) sont montés au niveau de la poutre (2).

9. Finisseur autonome avec un moteur à combustion interne (1) qui entraîne un système hydraulique (4) et un générateur (5) pour l'alimentation d'au moins un chauffage électrique de poutre, et avec une commande de moteur (7) et une commande de générateur (6) qui sont raccordées à une commande de machine (10) pour un mode de montage, **caractérisé en ce qu'**un dispositif de mesure de courant (21) est prévu pour la mesure du courant de sortie du générateur (5) dans le circuit électrique du générateur (5) avec un chauffage électrique de poutre dimensionné indépendamment de la fréquence et le dispositif de mesure de courant (21) est raccordé par un bus de données (17) à la commande de machine (10).

10. Finisseur selon la revendication 9, **caractérisé en ce que** la commande de machine (10) est conçue pour une réalisation d'une vérification de disponibilité du chauffage électrique de poutre à l'aide de valeurs de mesure de courant.

11. Finisseur selon la revendication 9 ou 10, **caractérisé en ce que** la commande de machine (10) est conçue pour une communication de prescriptions de vitesse de rotation à la commande de moteur (7), selon le besoin en puissance génératrice déterminé par le dispositif de mesure de courant (21) au moins du chauffage électrique de poutre pour un entraînement sans glissement du générateur (5) par le moteur à combustion interne (3).

12. Finisseur selon l'une des revendications 9 à 11, **caractérisé en ce que** le générateur (5) présente un capteur de température dont la valeur de mesure de température peut être transmise par le bus de données (17) à la commande de machine (10).

13. Finisseur selon l'une des revendications 9 à 12, **caractérisé en ce que** pour la surveillance de l'entraînement sans glissement du générateur (5) des dispositifs de mesure de vitesse de rotation pour la détermination de la vitesse de rotation du moteur à combustion (3) et du générateur (5) sont prévus, dont les valeurs de mesure de vitesse de rotation peuvent être transmises par le bus de données (17) à la commande de machine (10).

14. Finisseur selon l'une des revendications 9 à 13, **caractérisé en ce que** le générateur (5) est relié à un accumulateur d'énergie (23) alimentant en énergie le chauffage électrique de poutre au choix.

15. Finisseur selon l'une des revendications 9 à 14, **caractérisé en ce que** le chauffage électrique de poutre présente des résistances ohmiques en tant qu'éléments de chauffage (8, 9) et pour la commande de la température de poutre des capteurs de température (11, 12) sont montés au niveau de la poutre.

16. Finisseur selon l'une des revendications 9 à 15, **caractérisé en ce que** le générateur (5) est couplé par le biais d'une courroie trapézoïdale ou d'un engrenage de transmission au moteur à combustion (3).
